# EUROPEAN PATENT APPLICATION

(11) **EP 2 806 336 A1**
(43) Date of publication of application: **26.11.2014**
(21) Application number: 14166193.4
(22) Date of filing: 28.04.2014
(51) Int. Cl.: G06F 3/023

(54) **Text prediction in a text input associated with an image**

(30) Priority: 23.05.2013 JP 2013108629
(71) Applicant: OMRON CORPORATION, Kyoto-shi, Kyoto 600-8530 (JP)
(72) Inventor: Ohta, Takashi, Kyoto, 600-8530 (JP)
(74) Representative: Isarpatent

(57) **Abstract**

A computer-readable recording medium storing a program for character input which has an input predicting function for presenting, to a user, a candidate group for a phrase predicted to be input by the user, the program causing a computer to execute: an image recognizing step of recognizing a person, text or object included in an image by image recognition when a character is being input to an application program handling the image; and a candidate adding step of adding a phrase related to the person, text or object recognized from the image to a candidate group of phrases to be presented when a character is being input to the application program.

## Description

### TECHNICAL FIELD

The present invention relates to a technique for supporting character input in an electronic device and more particularly to improvement in an input predicting function.

### BACKGROUND ART

In execution of character input to an electronic device, software referred to as a character input system (which is also referred to as an input method (IM)) is usually used. Recently, a large number of character input systems are provided with an "input predicting" function for assisting an input manipulation by a user. The input prediction is a function for predicting a phrase to be input by the user, presenting a plurality of candidates, and causing the user to select a target phrase therefrom, thereby enabling character input (which is also referred to as "prediction conversion" because character conversion such as kana-kanji conversion is also performed simultaneously when the candidates are presented). By utilizing the input prediction, it is possible to considerably reduce key strokes and to avoid an input error. In the case in which the character input is carried out by a small number of keys as in a portable telephone or the case in which the character input is carried out by a software keyboard provided on a touch panel as in a smart phone or a tablet type terminal, the input prediction is particularly useful.

In general input prediction, a candidate group to be presented is determined in such a manner that a phrase having a high frequency of use is positioned in high order based on a previously registered prediction dictionary and an input history of the user. This method can obtain a good result in many cases but might considerably cause disappearance of a phrase intended by the user in the candidate group (or the phrase is displayed in lower order). For this reason, improvement for enhancing precision in the input prediction is desired.

For example, Japanese Laid-Open Patent Publication No. 2010-152608 proposes the method of presenting, in high order of a character conversion candidate, a phrase related to a position where an image has been photographed or a scene of an image when adding character information to an image by a camera or image editing software. However, this method cannot be applied to an image where information about a photographing position is not recorded (and is restricted to a camera having a position recording function). For this reason, the method is disadvantageous because of lacking versatility. Moreover, information obtained by scene analysis is restricted to be summary information such as a photograph of a mountain, a photograph of a person or a night view. Therefore, it is impossible to present, as a prediction candidate, a phrase related to a peculiar attribute of a subject (for example, a name of a person or the like).

In consideration of the actual circumstances, it is an objective of the present invention to provide a technique for enhancing precision and convenience of input prediction in a character input system.

In order to achieve the objective, the present invention employs a structure in which a target (a person, a character string, an object or the like) included in an image is recognized when character input to an application program handling the image is to be carried out, and a phrase related to the recognized target is added to a candidate group for a phrase of input prediction.

### SUMMARY

According to a first aspect of at least one embodiment of the present invention, there is provided a computer-readable recording medium storing a program for character input which has an input predicting function for presenting, to a user, a candidate group for a phrase predicted to be input by the user, and the program causes a computer to execute an image recognizing step of recognizing a person included in an image by image recognition when a character is being input to an application program handling the image, and a candidate adding step of adding a related phrase related to the person recognized from the image to a candidate group of phrases to be presented when a character is being input to the application program.

According to a second aspect of at least one embodiment of the present invention, there is provided a computer-readable recording medium storing a program for character input which has an input predicting function for presenting, to a user, a candidate group for a phrase predicted to be input by the user, and the program causes a computer to execute an image recognizing step of recognizing a character string included in an image by image recognition when a character is being input to an application program handling the image, and a candidate adding step of adding a related phrase related to the character string recognized from the image to a candidate group of phrases to be presented when a character is being input to the application program.

### BRIEF DESCRIPTION OF THE DRAWINGS

FIG. 1 is a diagram schematically showing a functional structure of a character input system according to a first embodiment;
FIG. 2 is a diagram showing an example of a data structure of a feature amount database and a related phrase database;
FIG. 3 is a diagram showing an example of a user interface in the case in which a new registrant is added;
FIG. 4 is a flowchart showing a character input system according to the first embodiment;
FIG. 5 is a diagram showing an example of an operation of the character input system according to the first embodiment;
FIG. 6 is a diagram showing an example of an operation of a character input system according to a second embodiment; and
FIG. 7 is a diagram showing an example of an operation of a character input system according to a fourth embodiment.

### DETAILED DESCRIPTION

Embodiments of the present invention will be described below with reference to the drawings. In the following embodiments, the case in which a program for character input according to the present invention is applied to a character input system (an input method) of an electronic device (specifically, a smart phone) and Japanese is input to mail software as one of application programs that are operated by the smart phone is illustrated as an example. However, it is one of application examples of the present invention, and a type of an electronic device with which the program according to the present invention is operated and a type of the application program to be a character input target are not particularly restricted. Moreover, the present invention can also be applied to character input for any other language in addition to Japanese input.

In this specification, a term of "character" is used in meaning of "at least one character", and the "character" includes characters of all types, for example, English characters, numerals, hiragana, katakana, Chinese characters, other special characters and the like unless otherwise specified. Moreover, both of terms of "character string" and "phrase" are used in meaning of "a set of characters formed by at least one character". In order to distinguish both of them from each other, however, character information obtained from an image is referred to as the "character string" and a unit of character input or a prediction candidate is referred to as the "phrase".

### <First Embodiment>

### (System Structure)

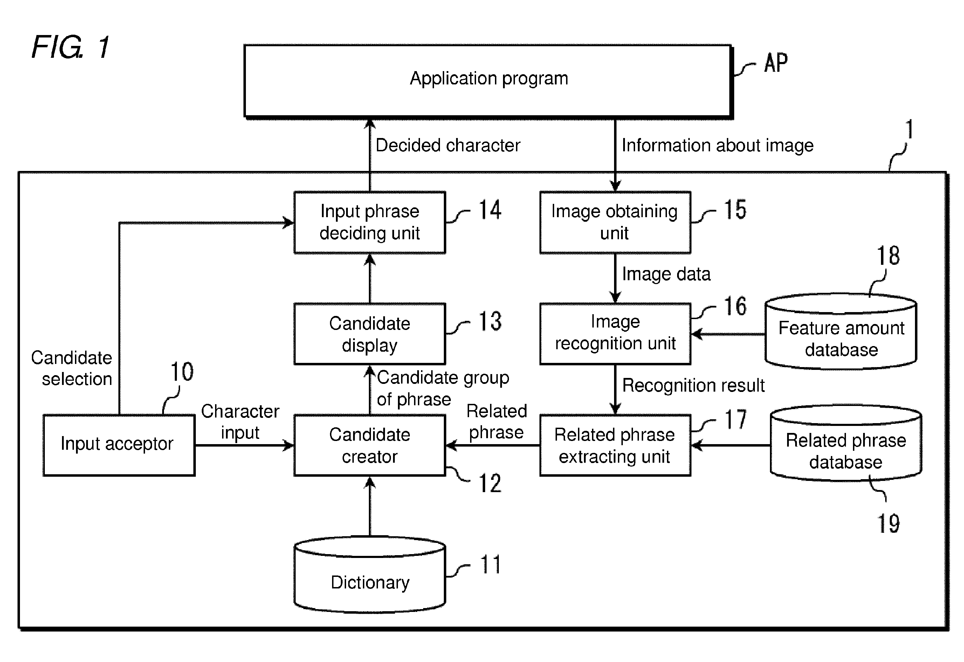

FIG. 1 is a diagram schematically showing a functional structure of a character input system according to a first embodiment of the present invention. Character input system 1 serves to input a character to various application programs AP (which are also abbreviated as applications) to be operated over a smart phone and includes input acceptor 10, dictionary 11, candidate creator 12, candidate display 13, input phrase deciding unit 14, image obtaining unit 15, image recognition unit 16, related phrase extracting unit 17, feature amount database 18, related phrase database 19, and the like. These functions are implemented by execution of a program for character input stored in a memory (a storage device) of the smart phone through a processor. Dictionary 11, feature amount database 18 and related phrase database 19 may be built in a nonvolatile storage device possessed by the smart phone or a part or all of data of feature amount database 18 and related phrase database 19 may be placed in an external computer or storage device (on LAN or a cloud). In the case of the latter structure, character input system 1 obtains or refers to information of dictionary 11 or databases 18 and 19 through a network if necessary.

Input acceptor 10 has a function for accepting an input manipulation from a user. The input manipulation includes input of a character, change in a character type to be input, deletion of a character, selection of a phrase from a candidate group presented by input prediction and the like. The user taps, clicks or drags a touch panel display with a finger, a stylus pen or the like, thereby enabling these input manipulations, for example. Candidate creator 12 is equivalent to a function for creating a candidate group for a phrase such as a conversion candidate or a prediction candidate based on a character input by the user, and candidate display 13 is equivalent to a function for presenting the candidate group for the phrase to the user. Input phrase deciding unit 14 is equivalent to a function for deciding an input phrase.

Dictionary 11 is a database having various dictionary data (dictionary files) to be referred to when a character is to be input, converted and predicted. For example, dictionary 11 includes a conversion dictionary for carrying out kana-kanji conversion, a learning dictionary for storing priority of a phrase corresponding to an input history of a user, a user dictionary for storing a phrase registered by a user, a prediction dictionary to be utilized for extracting a candidate for input prediction, and the like. A large number of phrases are registered in the prediction dictionary corresponding to a pronunciation thereof (a hiragana notation), for example.

Image obtaining unit 15 is equivalent to a function for reading image data from a storage device of a smart phone or an external device (on LAN or a cloud). Moreover, image obtaining unit 15 can directly fetch image data picked up by a built-in camera. Image recognition unit 16 is equivalent to a function for applying image recognition processing to the image data read by image obtaining unit 15 and recognizing a person included in an image. A large number of methods are proposed for person recognition processing, and any of the methods may be used in the present embodiment. For example, in the person recognition based on a face feature, necessary preprocessing of an original image is performed and a face area is then detected, and a feature amount such as a Haar-Like feature amount is extracted from the detected face area. Thereafter, a degree of similarity of the feature amount extracted from an image and a feature amount of each registrant registered previously in feature amount database 18 is evaluated to decide whether a face included in the image is coincident with a face of any registrant or not. If the coincident registrant is found, it is possible to identify (specify) who is a person in the image. Related phrase extracting unit 17 is equivalent to a function for extracting a related phrase related to the recognized person from related phrase database 19.

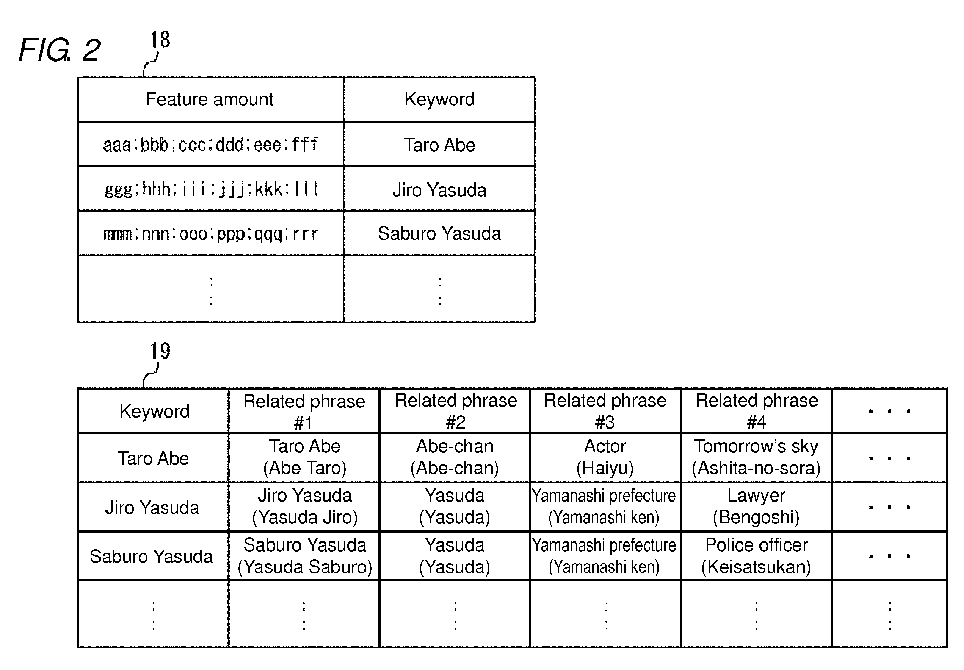

FIG. 2 schematically shows an example of data structures of feature amount database 18 and related phrase database 19. Feature amount database 18 is utilized in image recognition and stores respective feature amounts of a large number of registrants corresponding to keywords. Moreover, related phrase database 19 is utilized in input prediction based on the image recognition and stores a keyword and at least one related phrase corresponding thereto. "Pronunciation" which is the hiragana notation of each related phrase is related, as attendant information, to that related phrase. The user himself (herself) can add, edit and delete the data of feature amount database 18 and related phrase database 19.

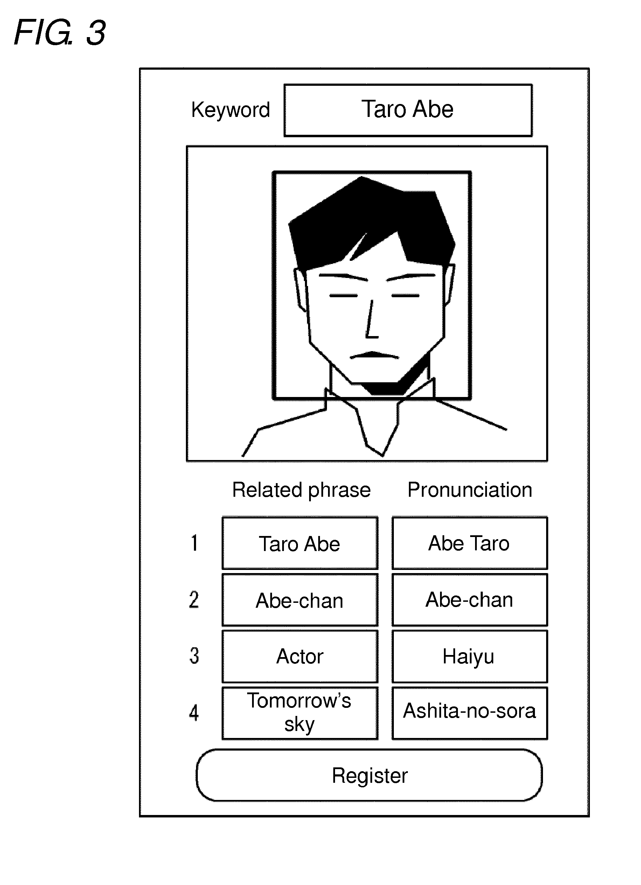

FIG. 3 shows an example of a user interface in the case in which a new registrant is added. When the new registrant is photographed by a built-in camera of a smart phone, a face is detected and a feature amount is extracted from the photographed image. When a keyword related to the registrant and at least one related phrase is input and a registration button is tapped in accordance with an instruction on a screen, data on the feature amount and the keyword are newly registered in feature amount database 18 and data on the keyword and the related phrase are newly registered in related phrase database 19. The keyword is information for linking the person (registrant) to the related phrase.

### (Character Input Processing)

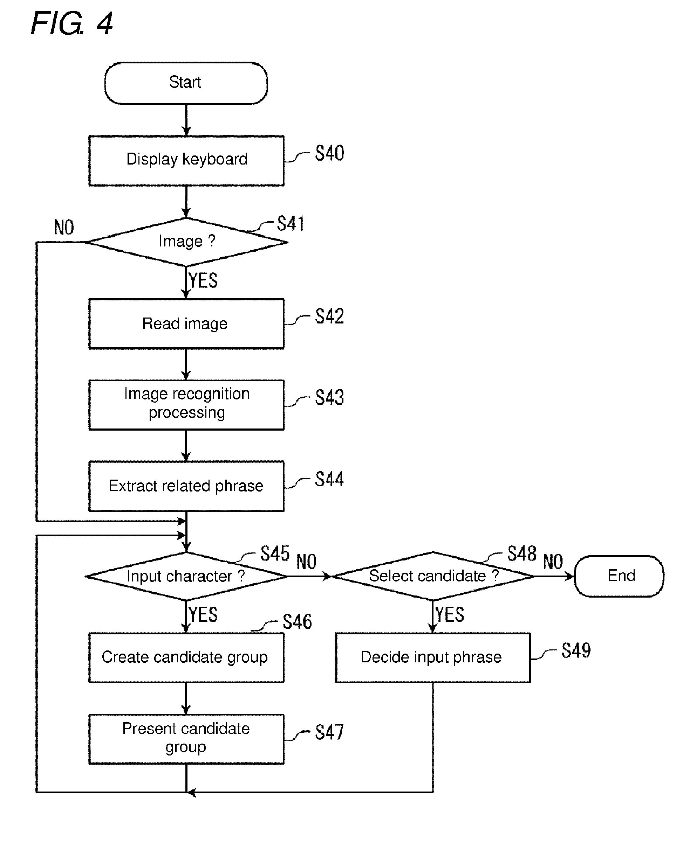

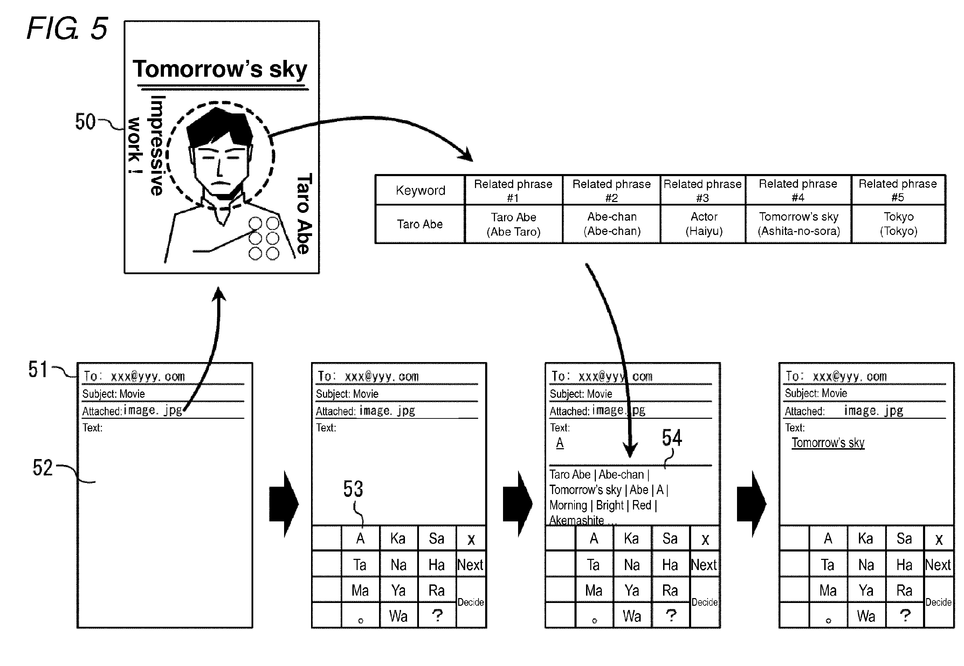

With reference to FIGS. 4 and 5, next, description will be given to an example of an operation in the case in which a character is input to mail software to be one of application programs AP. FIG. 4 is a flowchart showing processing to be executed by character input system 1 and FIG. 5 is a diagram for explaining the example of the operation.

In the example of FIG. 5, there is assumed a scene in which a user attaches image 50 obtained by photographing a movie poster (a file name : image. jpg) to new mail 51 and inputs characters describing an impression of a movie. It is assumed that image 50 includes a photograph of an actor appearing in the movie, a title of the movie, a catch phrase, a cast name and the like.

When the user taps character input window 52 of mail 51, character input system 1 becomes active so that software keyboard 53 is displayed on a touch panel display (step S40). In the example of display in FIG. 5, software keyboard 53 of a ten key type is displayed on a lower end of a screen. A character input interface is not restricted to the example of FIG. 5 and any interface such as a full keyboard or handwriting input may be employed.

If an image is attached to mail 51, information about image 50 is transferred from the mail software to character input system 1 (step S41). The information about the image is equivalent to information for specifying a source of image data (for example, a path to and a file name of the image data in the case of image data stored locally, URI in the case of image data on a network, or the like). If a plurality of images is attached to mail 51, information about the respective images is transferred to character input system 1.

If the information about the images is received (step S41; YES), image obtaining unit 15 reads the image data (step S42). Then, image recognition unit 16 applies image recognition processing to each of the images and tries to recognize a person included in each of the images (step S43). If image recognition unit 16 succeeds in the recognition of the person (that is, decides that a person in the image is coincident with any registrant registered in feature amount database 18), it transfers a keyword corresponding to the person to related phrase extracting unit 17. Related phrase extracting unit 17 extracts a related phrase related to the keyword from related phrase database 19 (step S44). The keyword itself may be added to one of the related phrases. If a plurality of persons is recognized from the image, phrases related to the respective persons are extracted. The reason is as follows. By covering all of information (persons) in the image, it is possible to more greatly increase a possibility that a phase intended by the user can be presented. If the person cannot be recognized from the image (for example, if no person is photographed in the image or if only an unknown person (that is, a person who is not registered in feature amount database 18) is photographed), processing of step S44 is skipped. FIG. 5 shows an example in which the person photographed in image 50 is recognized successfully and phrases such as "Taro Abe" (Abe Taro), "Abe-chan" (Abe-chan), "Actor" (haiyu), "Tomorrow's sky" (Ashita-no-sora) and "Tokyo" (Tokyo) are obtained as phrases related to the same person.

When the user inputs a character (step S45; YES), candidate creator 12 creates a candidate group for a phrase corresponding to a character which is being input (a character which has not been decided) by referring to dictionary 11 (step S46). As a candidate for the phrase, a prediction candidate which is a result obtained by complementing and converting the character which is being input by using a prediction dictionary is also extracted in addition to a conversion candidate which is a result obtained by converting the character which is being input based on a conversion dictionary or a user dictionary. Furthermore, if related phrases related to a person in an image are extracted in step S44, candidate creator 12 adds, to the prediction candidate, any of the related phrases which corresponds to the character which is being input (for example, a phrase having a prefix match in pronunciation or the like). For instance, if the character which is being input is "A", related phrases started with "A" such as "Taro Abe", "Abe-chan", "Tomorrow's sky" and the like are added to the prediction candidate.

When creating a candidate group, it is preferable to determine order of each candidate (presentation order) based on a past input history of the user. A method of utilizing an input history includes preferential presentation of a phrase input many times in the past by the user, preferential presentation of a phrase input most recently by the user, preferential presentation of a phrase having excellent connection (a part of speech, a context, a collocation or the like) to a sentence which has already been input (decided) by the user, and the like. Any of the methods may be utilized or a plurality of methods may be combined.

Alternatively, it is also preferable to determine order of each candidate in such a manner that a related phrase related to a person in an image is placed in higher order (presented more preferentially) than a general prediction candidate extracted from the prediction dictionary. The reason is as follows. It is possible to expect a high possibility that a sentence related to an image might be input.

Candidate display 13 presents, to the user, the candidate group for the phrase created in step S46 (step S47). In the example of the display in FIG. 5, candidate group 54 is displayed on an upper side of software keyboard 53. It is apparent that the related phrases related to the person in the image ("Taro Abe", "Abe-chan", "Tomorrow's sky" and the like) appear in the prediction candidate corresponding to the character which is being input, that is, "A". When the user selects any of the phrases in candidate group 54 (step S48; YES), input phrase deciding unit 14 decides the selected phrase as an input character and transfers information about the input character to the mail software (step S49). Consequently, the character is input to character input window 52 of mail 51. FIG. 5 shows a state in which the phrase of "Tomorrow's sky" is selected and input.

For example, in the case in which a sentence of "I saw the movie of "Tomorrow's sky"! The performance of the actor, Mr. Taro Abe was wonderful." is input to a mail body, the phrases of "Tomorrow's sky", "Taro Abe", "Actor" and the like in this sentence appear as related phases of an attached image in high order of the prediction candidate. Accordingly, the sentence can easily be input with a small number of key strokes, which is very convenient.

### (Advantage of the Present Embodiment)

According to the character input system in accordance with the first embodiment, when the user carries out the character input, the related phrase related to the person in the image is presented as the candidate for the input prediction. In the case in which the user tries to input the sentence related to the person in the image, accordingly, a possibility that a candidate conforming to the user's intention can be presented is increased. Consequently, it is possible to enhance precision and convenience of the input prediction.

Referring to the input prediction based on the conventional prediction dictionary or the input prediction based on the scene analysis (see the Japanese Laid-Open Patent Publication No. 2010-152608), only a general phrase having a high frequency of use can be presented as the prediction candidate. On the other hand, according to the input prediction in accordance with the present embodiment utilizing the image recognition, there is an advantage that a phrase which is specialized (that is, is not very general) for every recognition target can also be taken as the prediction candidate.

Moreover, in the present embodiment, the structure in which a phrase related to an image is obtained by using related phrase database 19 in which a related phrase is registered for every target (registrant) capable of being recognized by the image recognition is employed. Therefore, there is an advantage that the prediction processing for the related phrase can easily be implemented and high speed processing can be performed.

### <Second Embodiment>

Next, a character input system according to a second embodiment of the present invention will be described. A person (face) is recognized from an image and a phrase related to the person is added to a prediction candidate in the first embodiment, while the second embodiment is different from the first embodiment in that a character string is recognized from an image. A basic structure is the same as that in the first embodiment. Therefore, a peculiar structure to the second embodiment will be mainly described below.

Image recognition unit 16 according to the present embodiment applies image recognition processing to image data read by image obtaining unit 15 and recognizes a "character string" included in an image. A large number of methods are proposed for character recognition processing, and any of the methods may be used in the present embodiment. For example, it is possible to employ a method utilizing pattern matching, a method of comparing feature amounts for respective characters in the same manner as the face recognition, and the like. Feature amount database 18 registers a template and a feature amount for a single character for English characters, numerals, hiragana, katakana or Chinese characters. For related phrase database 19, it is possible to use a database having the same structure as that in the first embodiment.

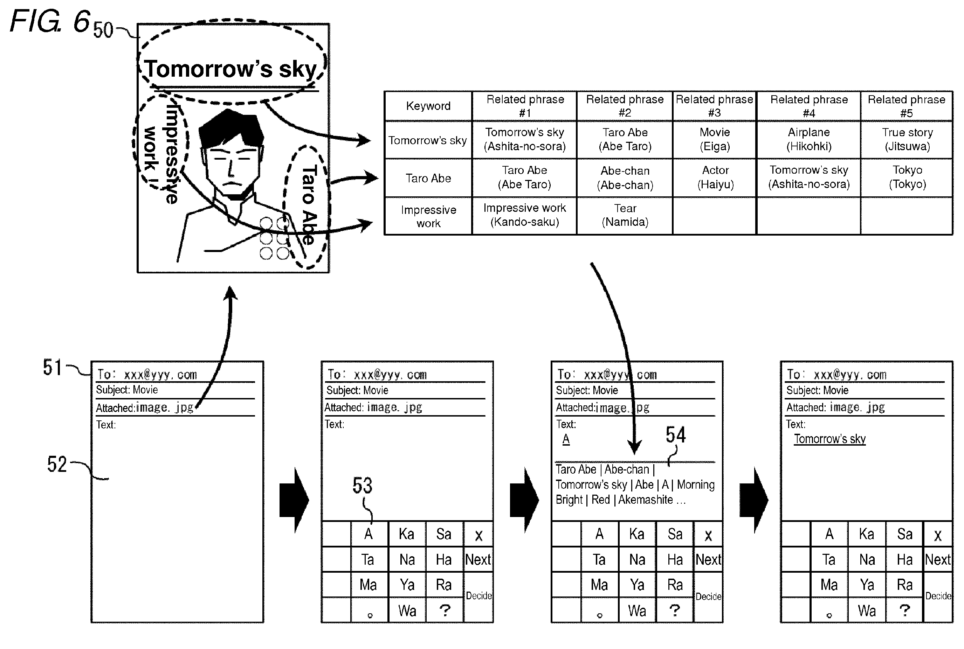

With reference to FIGS. 4 and 6, description will be given to an example of an operation in the case in which a character is input to mail software. FIG. 6 is a diagram for explaining an example of an operation according to the second embodiment. As shown in FIG. 6, image 50 attached to mail 51 includes a plurality of character strings, for example, a title of a movie, a catch phrase, a cast name, and the like. In the second embodiment, these character strings are recognized and utilized in input prediction.

Processing contents in steps S40 to S42 are the same as those in the first embodiment. In image recognition of step S43, image recognition unit 16 tries to recognize a character string from each image attached to a mail. In the example of FIG. 6, it is indicated that a character string such as "Tomorrow's sky", "Taro Abe" or "Impressive work" is recognized. Next, related phrase extracting unit 17 extracts a related phrase related to a character string obtained in step S43 (which corresponds to the "keyword" in the first embodiment) from related phrase database 19 (step S44). At this time, a character string itself recognized from an image, for example, "Tomorrow's sky", "Taro Abe" or the like is also added as one of the related phrases. If required, the recognized character string may be subjected to morphological analysis to extract an independent word such as "tomorrow", "sky", "Abe" or "impressive" and to add these independent words or related phrases thereof. Subsequent processing contents are the same as those in the first embodiment.

According to the character input system in accordance with the second embodiment, when the user carries out the character input, the character string in the image or the phrase related thereto is presented as the candidate for the input prediction. In the case in which the user tries to input the character string itself in the image or the sentence related thereto, accordingly, a possibility that a candidate conforming to the user's intention can be presented is increased. Consequently, it is possible to enhance precision and convenience of the input prediction.

### <Third Embodiment>

Next, a character input system according to a third embodiment of the present invention will be described. Although the "person (face)" and the "character string" are set to be the targets of the image recognition in the first and second embodiments respectively, a plurality of types of targets are set to be the targets of the image recognition in the third embodiment.

For example, the first embodiment and the second embodiment may be combined with each other. In other words, image recognition unit 16 executes both of processing including person recognition and character string recognition and presents, as prediction candidates, related phrases related to targets (a person and a character string) which can be recognized. Furthermore, image recognition unit 16 may recognize a "specific object" included in an image to add a phrase related to the specific object to the prediction candidate. The "specific object" indicates any of objects other than the "person" and the "character string" which can be recognized by the image recognition processing of image recognition unit 16 (that is, which has feature amount data registered previously therein). It is also possible to register any type of objects, for example, animals, plants, industrial products, buildings, logo marks representing companies and other organizations, and the like. Thus, a type or amount of information which can be obtained from an image is increased with an increase in a type of the target which can be recognized. Therefore, it is expected that precision and convenience of input prediction can further be enhanced.

### <Fourth Embodiment>

Next, a character input system according to a fourth embodiment of the present invention will be described. In the fourth embodiment, description will be given to a method of adjusting presentation order (priority) of a plurality of related phrases when the plurality of related phrases are extracted as a result of image recognition. Since a basic structure is the same as that in each of the embodiments, a peculiar structure to the fourth embodiment will be mainly described below.

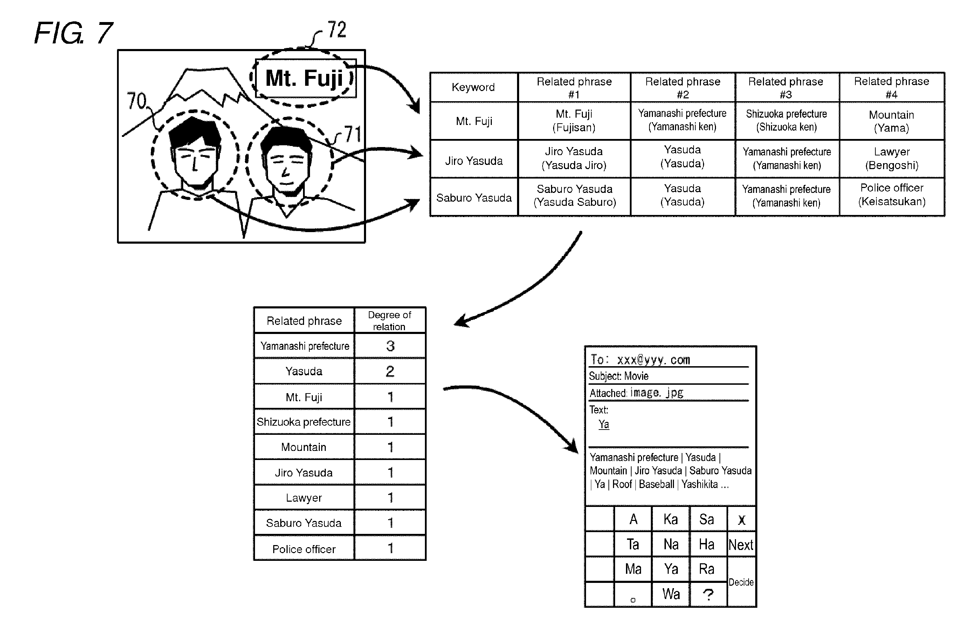

As shown in FIG. 7, it is assumed that two persons 70 and 71 and a single character string 72 are recognized from an image, and "Jiro Yasuda", "Yasuda", "Yamanashi prefecture" and "Lawyer" are extracted as the related phrases related to person 71, "Saburo Yasuda", "Yasuda", "Yamanashi prefecture" and "Police officer" are extracted as the related phrases related to person 70, and "Mt. Fuji", "Yamanashi prefecture", "Shizuoka prefecture" and "Mountain" are extracted as the related phrases related to the character string 72.

Candidate creator 12 calculates a degree of relation to an image for each related phrase. The degree of relation is equivalent to an index representing strength of relevance of the related phrase and the image. In the present embodiment, the number of targets (persons, character strings) to which related phrases are related is used as the degree of relation. Since the phrase of "Yamanashi prefecture" has relation to three targets 70, 71 and 72, the degree of relation is "3". Since the phrase of "Yasuda" has relation to two targets 70 and 71, the degree of relation is "2". The other phrases have a degree of relation of "1". Candidate creator 12 adjusts the order in such a manner that the related phrase having a higher degree of relation to an image is preferentially presented when the related phrase is added to a prediction candidate. In other words, when a user inputs a character of "Ya", the phrases of "Yamanashi prefecture" and "Yasukawa" are presented as the prediction candidate prior to the phrases of "Jiro Yasuda", "Ichiro Yasuda", "Mountain" and the like.

It seems that a phrase having a high degree of relation to an image might conform to the user's intention more greatly. Therefore, by adjusting presentation order or narrowing down a candidate to be presented as in the present embodiment, it is possible to expect enhancement in precision and convenience of input prediction. In the example of FIG. 7, ten and several related phrases are present. It is also assumed that several tens to several hundreds related phrases are extracted depending on the number of the targets to be recognized from the image or the number of vocabularies of related phrase database 19. In the case in which a huge number of related phrases are thus obtained, the adjustment or narrowing-down of the presentation order as in the present embodiment is very effective.

### <Other Embodiments>

The respective embodiments are only specific examples according to the present invention. For instance, it is also possible to employ the following structure as an embodiment according to the present invention.
(1) A character string is recognized from an image, and a related phrase is derived from the character string are presented as prediction candidates in the second embodiment. It is also possible to employ a simpler structure in which only the character string recognized from the image (or the recognized character string and the independent words resulted from morphological analysis of the character string) is presented as the prediction candidate. In the case in which the character string included in the image is input as text to a mail body or the like, it is very convenient that the prediction candidate is simply presented. In the case of the structure, related phrase database 19 and the processing of step S44 in FIG. 4 are not necessary.
(2) In the fourth embodiment, a phrase having relevance to a plurality of targets is preferentially presented. It is also possible to determine order of presentation of the related phrase on another basis. As one of the methods, the presentation order of the related phrase is determined based on a past input history of a user. For example, record a selection frequency of each related phrase in related phrase database 19 and preferentially present a phrase having a higher frequency may be employed. Although a method utilizing an input history includes various methods, that is, a method of raising priority of a phrase input most recently by a user, a method of raising priority of a phrase with excellent connection to a sentence which has already been input (decided) by the user, and the like, any of the methods may be employed or they may be combined with each other. Thus, by adjusting the order of the related phrase based on the input history, it is possible to present, in high order, a phrase having a high possibility of conformity to the user's intention.
(3) In related phrase database 19, respective related phrases may be stored together with attributes thereof. The attribute is equivalent to information to be utilized for classifying the related phrases (discriminating types). For instance, if a phrase corresponding to an item such as a name of a person, a nickname, a birthplace or a mail address is registered as a phrase related to the person, an item name such as "name", "nickname", "birthplace" or "mail address" corresponds to the attribute. When the related phrase is thus managed together with the attribute, convenience is increased. For example, it is possible to utilize information about the attribute in input prediction.

For instance, it is also possible to learn a selection frequency for each attribute as the input history of the user and to present, in high order, a related phrase having an attribute with a high selection frequency (probability) of the user. This method preferentially presents phrases having the same attribute when continuously inputting information about the same attribute as in the case of the input of names of persons in a group photograph in characters while viewing the photograph, which is convenient.

(4) Although a prediction candidate is created and presented based on a character which is being input by a user (a character which has not been decided) in the embodiments, a timing for presenting the prediction candidate is not restricted thereto. For example, the prediction candidate may be created and presented based on connection to a phrase which had been input (decided) just previously. Moreover, the prediction candidate may be created and presented based on a just previous manipulation by the user (for example, an image is dragged and dropped into a character input window) or the like.

Disclosed is a computer-readable recording medium storing a program for character input which has an input predicting function for presenting, to a user, a candidate group for a phrase predicted to be input by the user, and the program causes a computer to execute an image recognizing step of recognizing a person included in an image by image recognition when a character is being input to an application program handling the image, and a candidate adding step of adding a related phrase related to the person recognized from the image to a candidate group of phrases to be presented when a character is being input to the application program.

The input predicting function may serve to provide only a function for complementing input of a user or may serve to provide a character converting function such as kana-kanji conversion (which is a so-called prediction converting function) in addition to the complementation of the input. Moreover, the input predicting function may create and present the candidate group based on a character which is being input (a character before decision) or may create and present the candidate group based on a phrase input (decided) just previously, a manipulation carried out by the user just previously, or the like.

The application program handling an image indicates an application program having a function for attaching, inserting, displaying or editing an image or the like, and mail software, an SNS browser, a Web browser, word processor software, spreadsheet software, an image viewer, image editing software or the like corresponds thereto, for example.

The image recognition indicates processing for identifying and specifying a target included in an image. In other words, in the image recognizing step, the target (a person or the like) is detected from the image, and furthermore, it is identified and specified who the detected target is.

Accordingly, a related phrase related to a person in an image is presented as a candidate for input prediction when a user performs the character input. In the case in which the user tries to input a sentence related to the person in the image, accordingly, a possibility that a candidate conforming to the user's intention can be presented is increased. Consequently, it is possible to enhance precision and convenience of the input prediction.

Disclosed is a computer-readable recording medium storing a program for character input which has an input predicting function for presenting, to a user, a candidate group for a phrase predicted to be input by the user, and the program causes a computer to execute an image recognizing step of recognizing a character string included in an image by image recognition when a character is being input to an application program handling the image, and a candidate adding step of adding a related phrase related to the character string recognized from the image to a candidate group of phrases to be presented when a character is being input to the application program.

Accordingly, when the user performs the character input, the related phrase related to the character string in the image (the character string itself is one of the related phrases) is presented as a candidate for input prediction. In the case in which the user tries to input the character string itself in the image and a sentence related thereto, accordingly, a possibility that a candidate conforming to the user's intention can be presented is increased. Consequently, it is possible to enhance precision and convenience of the input prediction.

Both a person and a character string which are included in the image may be recognized by image recognition in the image recognizing step, and respective phrases related to the person and the character string which are recognized from the image may be added to the candidate group in the candidate adding step. Furthermore, a specific object included in the image may also be recognized by image recognition in the image recognizing step, and a related phrase related to the specific object recognized from the image may be added to the candidate group in the candidate adding step. The "specific object" indicates any of objects other than the person and the character string which can be recognized by the present program. In the case in which there is performed recognition processing for different types of targets (for example, the person and the character string, the person and the specific object, the character string and the specific object, and the person, the character string and the specific object), the recognition processing for the respective targets may be executed at the same time (in parallel) or successively (sequentially). In the recognition processing for the respective targets, moreover, the same program module may be used or a different program module for each target may be used.

A related phrase related to a target recognized from the image may be obtained with reference to a database in which at least one related phrase is previously registered for every target capable of being recognized by image recognition in the candidate adding step. By utilizing the database, it is possible to readily implement the prediction processing for the related phrase, and furthermore, to execute high speed processing.

Upon a plurality of targets being recognized in the image recognizing step, a related phrase of each of the plurality of recognized targets may be added to the candidate group in the candidate adding step. The case in which "the plurality of targets are recognized" includes both the case in which the plurality of targets are recognized from a single image and the case in which the plurality of targets are recognized from a plurality of images. Moreover, the "plurality of targets" may be a plurality of targets of the same type (for example, persons, character strings or the like) or a plurality of targets of different types (for example, a person and a character string, a person, a character string and a specific object, and the like). In the case in which the plurality of targets are recognized, thus, all of their related phrases are added to the candidate group. Consequently, it is possible to enhance a possibility that a phrase intended by a user can be presented.

In the candidate adding step, order of the related phrase to be added to the candidate group may be determined in such a manner that a related phrase related to the plurality of targets is presented preferentially to a related phrase related to only one target. It seems that there is a high possibility that the phrase related to the plurality of targets might correspond to the user's intension. Therefore, by adjusting presentation order or narrowing down a candidate to be presented as described above, it is possible to expect enhancement in precision and convenience of input prediction.

The present invention can be grasped as a program for character input which has at least a part of the processing or a computer-readable recording medium which stores the program. Moreover, the present invention can be grasped as an electronic device (or a computer provided in an electronic device) having a storage device configured to store a program for character input which has at least a part of the processing and a processor configured to read the program from the storage device and to execute the read program. Furthermore, the present invention can also be grasped as a character input system or a character input supporting method which is implemented by execution of the program for character input by the electronic device or the like. For example, the electronic device includes a personal computer, a portable telephone, a smart phone, a tablet type terminal (a slate type terminal), a portable information terminal, a game device, a television device, an image pickup device and the like. By combining the structure and the processing with each other as long as technical inconsistency does not occur, it is possible to constitute the present invention.

According to the present invention, it is possible to enhance precision and convenience of input prediction in a character input system.

## Claims

1. A computer-readable recording medium storing a program for character input which has an input predicting function for presenting, to a user, a candidate group for a phrase predicted to be input by the user, the program causing a computer to execute:
an image recognizing step of recognizing a person included in an image by image recognition when a character is being input to an application program handling the image (S43); and
a candidate adding step of adding a related phrase related to the person recognized from the image to a candidate group of phrases to be presented when a character is being input to the application program (S46).

2. A computer-readable recording medium storing a program for character input which has an input predicting function for presenting, to a user, a candidate group for a phrase predicted to be input by the user, the program causing a computer to execute:
an image recognizing step of recognizing a character string included in an image by image recognition when a character is being input to an application program handling the image (S43); and
a candidate adding step of adding a related phrase related to the character string recognized from the image to a candidate group of phrases to be presented when a character is being input to the application program (S46).

3. The computer-readable recording medium storing the program for character input according to claim 1, wherein a character string included in the image is recognized by image recognition in the image recognizing step (S43), and
a related phrase related to the character string recognized from the image is added to the candidate group in the candidate adding step (S46).

4. The computer-readable recording medium storing the program for character input according to any of claims 1 to 3, wherein a specific object included in the image is recognized by image recognition in the image recognizing step (S43), and
a related phrase related to the specific object recognized from the image is added to the candidate group in the candidate adding step (S46).

5. The computer-readable recording medium storing the program for character input according to any of claims 1 to 4, wherein a related phrase related to a target recognized from the image is obtained with reference to a database (19) in which at least one related phrase is previously registered for every target capable of being recognized by image recognition in the candidate adding step (S46).

6. The computer-readable recording medium storing the program for character input according to any of claims 1 to 5, wherein upon a plurality of targets being recognized in the image recognizing step (S43), a related phrase of each of the plurality of recognized targets is added to the candidate group in the candidate adding step (S46).

7. The computer-readable recording medium storing the program for character input according to claim 6, wherein order of the related phrase to be added to the candidate group is determined in such a manner that a phrase related to the plurality of targets is presented preferentially to a phrase related to only one of the plurality of target in the candidate adding step (S46).

8. An electronic device comprising:
a storage device configured to store a program for character input; and
a processor configured to read the program from the storage device and to execute the read program,
wherein the program for character input has an input predicting function for presenting, to a user, a candidate group for a phrase predicted to be input by the user, the program causing the processor to execute:
an image recognizing step of recognizing a person included in an image by image recognition when a character is being input to an application program handling the image (S43); and
a candidate adding step of adding a related phrase related to the person recognized from the image to a candidate group of phrases to be presented when a character is being input to the application program (S46).

9. An electronic device comprising:
a storage device configured to store a program for character input; and
a processor configured to read the program from the storage device and to execute the read program,
wherein the program for character input has an input predicting function for presenting, to a user, a candidate group for a phrase predicted to be input by the user, the program causing the processor to execute:
an image recognizing step of recognizing a character string included in an image by image recognition when a character is being input to an application program handling the image (S43); and
a candidate adding step of adding a related phrase related to the character string recognized from the image to a candidate group of phrases to be presented when a character is being input to the application program (S46).

10. A character input supporting method of supporting character input of a user by presenting, to the user, a candidate group for a phrase predicted to be input by the user, the method comprising:
an image recognizing step of recognizing a person included in an image by image recognition when a character is being input to an application program handling the image (S43); and
a candidate adding step of adding a phrase related to the person recognized from the image to a candidate group of phrases to be presented when a character is being input to the application program (S46).

11. A character input supporting method of supporting character input of a user by presenting, to the user, a candidate group for a phrase predicted to be input by the user, the method comprising:
an image recognizing step of recognizing a character string included in an image by image recognition when a character is being input to an application program handling the image (S43); and
a candidate adding step of adding a phrase related to the character string recognized from the image to a candidate group of phrases to be presented when a character is being input to the application program (S46).
